(19) Europäisches Patentamt
European Patent Office
Office européen des brevets

(11) EP 3 221 044 B1

(12) # FASCICULE DE BREVET EUROPEEN

(45) Date de publication et mention de la délivrance du brevet:
**12.06.2019 Bulletin 2019/24**

(21) Numéro de dépôt: **15798002.0**

(22) Date de dépôt: **17.11.2015**

(51) Int Cl.:
***C08J 9/00*** *(2006.01)*
***A01N 25/16*** *(2006.01)*
***A62D 3/38*** *(2007.01)*
***C06B 21/00*** *(2006.01)*
***B01J 20/22*** *(2006.01)*

(86) Numéro de dépôt international:
**PCT/EP2015/076851**

(87) Numéro de publication internationale:
**WO 2016/079136 (26.05.2016 Gazette 2016/21)**

(54) **PROCÉDÉ DE FABRICATION D'UNE MOUSSE AQUEUSE, MOUSSE AQUEUSE OBTENUE PAR UN TEL PROCÉDÉ ET SES UTILISATIONS**

VERFAHREN ZUR HERSTELLUNG EINES WÄSSRIGEN SCHAUMS, DURCH SOLCH EIN VERFAHREN ERHALTENER WÄSSRIGER SCHAUM UND VERWENDUNGEN DAVON

METHOD FOR PRODUCING AN AQUEOUS FOAM, AQUEOUS FOAM OBTAINED BY SUCH A METHOD AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2014 FR 1461155**

(43) Date de publication de la demande:
**27.09.2017 Bulletin 2017/39**

(73) Titulaire: **Commissariat à l'Énergie Atomique et aux Énergies Alternatives
75015 Paris (FR)**

(72) Inventeurs:
- **CADRA, Stéphane
F-37550 Saint Avertin (FR)**
- **SALAS, Jean-Félix
F-37250 Montbazon (FR)**
- **BALLAND-LONGEAU, Alexia
F-37000 Tours (FR)**
- **GARONNE, François
F-37700 Saint Pierre des Corps (FR)**
- **FAURE, Sylvain
F-84210 Venasque (FR)**
- **IMBERT, Bruno
F-92320 Chatillon (FR)**

(74) Mandataire: **Brevalex
95, rue d'Amsterdam
75378 Paris Cedex 8 (FR)**

(56) Documents cités:
**WO-A2-2009/153495 US-A- 5 851 461**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 221 044 B1

Printed by Jouve, 75001 PARIS (FR)

**Description**

## DOMAINE TECHNIQUE

La présente invention se rapporte à un procédé de fabrication d'une mousse aqueuse stable présentant, en outre, des propriétés autoportantes ainsi que des propriétés complexantes, ou séquestrantes, améliorées.

L'invention se rapporte également à une mousse aqueuse obtenue, ou susceptible d'être obtenue, par ce procédé de fabrication.

L'invention se rapporte encore à l'utilisation d'une telle mousse aqueuse, notamment dans le domaine de décontamination, dans le domaine du traitement des effluents ou encore dans le domaine du confinement ou du désamorçage d'engins explosifs ou suspectés comme tels.

## ÉTAT DE LA TECHNIQUE ANTÉRIEURE

Une mousse est un milieu diphasique constitué d'un matériau, solide ou liquide, intimement mêlé à du gaz. On parle alors respectivement d'une mousse solide ou d'une mousse liquide.

Dans le cadre de la présente invention, on va s'attacher à une mousse liquide, également dénommée "mousse aqueuse", cette dernière expression étant celle qui sera utilisée dans la suite de la présente description.

Une mousse aqueuse peut être obtenue par la dispersion d'un gaz dans une solution, cette dispersion pouvant notamment être obtenue par injection de bulles de ce gaz dans ladite solution ou par détente de ce gaz dans ladite solution. Dans ce dernier cas, la détente du gaz va provoquer l'apparition de bulles dudit gaz et engendrer une expansion de la phase liquide constituée par la solution.

Une mousse aqueuse présente donc une structure alvéolaire formée de bulles de gaz emprisonnées dans des cellules de solution. Ces cellules de liquide, dont le diamètre est de l'ordre du millimètre, sont composées par des films de solution qui se rejoignent en des bords de Plateau reliés par des noeuds.

Une mousse aqueuse est le plus souvent décrite par son foisonnement, noté F, qui correspond au rapport du volume occupé par la mousse aqueuse une fois formée sur le volume de la solution injectée pour la fabrication de ladite mousse aqueuse :

$$F = \frac{V_{mousse\ aqueuse}}{V_{solution}}$$

Toutefois, après formation, la structure alvéolaire de la mousse aqueuse évolue sous l'effet des trois mécanismes principaux suivants :

- le drainage : sous l'effet de la gravité, la phase liquide s'écoule vers le bas le long du réseau de films de solution qui unissent les bords de Plateau. On obtient une mousse sèche en hauteur et une mousse humide en bas ;
- la coalescence des bulles : le drainage entraîne l'amincissement des films de la mousse aqueuse. A partir d'une certaine épaisseur, le film n'est plus en mesure de résister à des perturbations et se rompt, entraînant la coalescence des bulles de gaz ; et
- le mûrissement : conformément à la loi de Laplace, la pression à l'intérieur des petites bulles est supérieure à celle à l'intérieur des plus grandes bulles. Ce phénomène accélère la coalescence des bulles, les plus petites se vidant dans les plus grandes, entraînant une augmentation progressive de la taille des bulles.

La stabilité de la mousse aqueuse est sa capacité à conserver, dans le temps, sa structure alvéolaire.

L'évolution de cette structure alvéolaire, qui permet donc d'évaluer la stabilité de la mousse aqueuse, peut être suivie par la vitesse de sédimentation de cette mousse aqueuse, et être notamment mesurée par l'affaissement de cette mousse aqueuse après dépôt dans un contenant donné, tel qu'une éprouvette graduée comme on le verra dans les exemples ci-après.

Il est déjà connu d'améliorer la stabilité d'une mousse aqueuse par l'ajout, à la solution, d'un tensioactif qui s'adsorbe aux interfaces gaz/liquide.

Si certaines mousses aqueuses présentent ainsi une stabilité sur une période s'étendant de quelques minutes à plusieurs mois, elles ne présentent toutefois pas nécessairement une deuxième propriété dite d'autoportance.

La propriété d'autoportance, ou propriété autoportante, est définie comme étant la capacité de la mousse aqueuse à conserver sa forme après dépôt d'un amas de cette mousse aqueuse sur une surface et ce, en l'absence de tout support, par exemple du type tente ou éprouvette. Cette propriété d'autoportance peut également être définie comme étant la capacité d'une mousse aqueuse à atteindre des hauteurs significatives, à partir d'une surface donnée

ou d'un volume donné.

L'autoportance d'une mousse aqueuse peut ainsi être quantifiée par la hauteur maximale, notée HF, que cette mousse aqueuse peut atteindre. Cette hauteur maximale HF est dépendante de trois forces qui agissent sur l'amas de mousse aqueuse :

- la gravité qui tend à aplatir l'amas de mousse aqueuse sur la surface sur laquelle l'amas a été déposé,
- la résistance au cisaillement, qui s'oppose au déplacement des bulles. Si on assimile la mousse aqueuse à un fluide viscoélastique, il s'agit de la composante conservative du module élastique, noté G, et
- la viscosité, composante dissipative de ce module élastique G.

Le but de la présente invention est donc de proposer un procédé de fabrication d'une mousse aqueuse qui présente, concomitamment, des propriétés de stabilité et d'autoportance.

Un autre but de l'invention est de proposer un procédé de fabrication d'une mousse aqueuse qui présente, en plus des propriétés de stabilité et d'autoportance, des propriétés complexantes, en particulier des propriétés complexantes de cations métalliques.

Par propriétés complexantes, également dénommées "propriétés de complexation" ou "propriétés séquestrantes", on entend la capacité de la structure alvéolaire de la mousse aqueuse à retenir des espèces présentes en solution et, partant, à réduire la diffusion de telles espèces dans la phase liquide de drainage. On considère qu'une mousse aqueuse présente des propriétés complexantes d'une espèce donnée dès lors que la concentration en ladite espèce dans la phase liquide de drainage est inférieure à la concentration en cette même espèce dans la solution ayant permis la formation de la mousse aqueuse. De telles espèces peuvent, en particulier, être des cations métalliques.

## EXPOSÉ DE L'INVENTION

Les buts précédemment énoncés, ainsi que d'autres, sont atteints, en premier lieu, par un procédé de fabrication d'une mousse aqueuse du type précité, c'est-à-dire un procédé qui comprend les étapes suivantes :

(a) la préparation d'une solution comprenant au moins un tensioactif et au moins un solvant polaire protique, le solvant polaire protique ou l'un des solvants polaires protiques étant l'eau,
(b) la mise en contact de la solution préparée à l'étape (a) avec un gaz sous pression, moyennant quoi un mélange diphasique est obtenu, et
(c) l'injection du mélange diphasique obtenu à l'étape (b), moyennant quoi, après détente ou dispersion du gaz, la mousse aqueuse est obtenue,

Selon l'invention, la solution comprend, en outre, au moins un polysaccharide azoté et au moins un composé gélifiant choisi parmi un polysaccharide non azoté et de la gélatine.

La mise en oeuvre d'au moins un composé gélifiant choisi parmi un polysaccharide non azoté et de la gélatine, en mélange avec les autres composés présents dans la solution à partir de laquelle la mousse aqueuse est fabriquée - en particulier, le(s) tensioactif(s) et le(s) solvant(s) protique(s) polaire(s) - permet de figer, par gélification, la structure alvéolaire de la mousse aqueuse après la formation de celle-ci. Sa structure alvéolaire étant gélifiée, la mousse aqueuse ainsi fabriquée est non seulement stable, mais est également autoportante, dans le sens où elle ne s'écroule pas sous l'effet des forces de cisaillement induites par la gravité et l'absence de support.

Comme démontré ci-après, dans les exemples, du fait de sa structure alvéolaire gélifiée, la mousse aqueuse selon l'invention se caractérise également par des propriétés complexantes ou séquestrantes.

Les documents US 5,360,828 et US 5,382,285, respectivement référencés [1] et [2] dans la suite de la présente description, décrivent un procédé de formation d'une mousse à partir d'une solution comprenant un polysaccharide, tel qu'un polysaccharide non azoté, et un solvant polaire protique, tel que l'eau.

Le procédé de fabrication décrit dans les documents [1] et [2] comprend plus précisément les étapes successives suivantes :

(a) la préparation de la solution comprenant un polysaccharide et un solvant polaire protique,
(b) la formation d'un gel à partir de cette solution,
(c) la congélation du gel, et
(d) la cryodessiccation de ce gel pour former une mousse.

A l'issue du procédé de fabrication décrit dans ces documents [1] et [2], on obtient donc une mousse solide, par opposition à la nature aqueuse de la mousse telle qu'obtenue par le procédé de fabrication selon l'invention. Or, de par sa structure alvéolaire solide, une mousse solide ne présente pas de propriétés complexantes, contrairement à la

mousse aqueuse qui est obtenue par le procédé de fabrication selon l'invention et qui se comporte comme un liquide viscoélastique.

Comme indiqué précédemment, la solution préparée à l'étape (a) du procédé selon l'invention comprend au moins un polysaccharide azoté, au moins un composé gélifiant choisi parmi un polysaccharide non azoté et de la gélatine, au moins un tensioactif et au moins un solvant polaire protique.

Le composé gélifiant mis en oeuvre dans le cadre de la présente invention est plus particulièrement un composé ayant la capacité de gélifier, c'est-à-dire ayant la capacité de former des liaisons hydrogène par abaissement de sa température en-dessous d'une température seuil, dite "température de gélification" et ce, après formation de la mousse aqueuse.

La solution préparée à l'étape (a) peut ne comprendre qu'un seul composé gélifiant, c'est-à-dire soit un polysaccharide non azoté, soit de la gélatine. Mais cette solution peut également comprendre un mélange de deux, trois, voire plus, composés gélifiants, par exemple un mélange d'un polysaccharide non azoté avec de la gélatine ou encore un mélange de plusieurs polysaccharides non azotés, ce dernier mélange pouvant, en outre, comprendre de la gélatine.

Un polysaccharide est un polymère constitué de plusieurs oses liés entre eux par des liaisons O-osidiques, d'où découle son appellation équivalente de polyoside.

L'expression "polysaccharide non azoté", utilisée ci-dessus et dans la suite de la présente description, signifie que le polysaccharide ne comprend aucun atome d'azote dans sa structure. *A contrario,* l'expression "polysaccharide azoté" signifie que le polysaccharide comprend au moins un atome d'azote dans sa structure.

Un polysaccharide non azoté disposant de la capacité de gélifier, par diminution de la température de mise en oeuvre sous la température de gélification, est, classiquement, un polymère naturel hydrosoluble.

Un avantage à mettre en oeuvre un ou plusieurs polysaccharides non azotés et/ou de la gélatine réside dans le fait que ces composés ne présentent pas de toxicité pour le personnel d'intervention et pour l'environnement. En outre, ces polysaccharides et la gélatine sont chimiquement compatibles avec un nombre important de tensioactifs. Par compatibilité chimique, on entend qu'il n'existe pas de réaction particulière entre ces composés gélifiants et les tensioactifs.

Ce polysaccharide non azoté peut être choisi parmi un glucane, un galactane et un alginate, l'alginate étant un polysaccharide obtenu à partir d'algues brunes (laminaires et fucus).

Le polysaccharide non azoté est, avantageusement, un glucane ou un galactane.

Lorsque le polysaccharide non azoté est un glucane, il peut notamment être choisi parmi l'amidon, la cellulose, la dextrine et la pectine.

Lorsque le polysaccharide non azoté est un galactane, il peut notamment être choisi parmi l'agar-agar et le carraghénane.

Dans une variante préférentielle, le polysaccharide non azoté est l'agar-agar.

La solution préparée lors de l'étape (a) comprend également au moins un solvant polaire protique.

Comme explicité ci-dessus pour le(s) composé(s) gélifiant(s), la solution peut ne comprendre qu'un seul solvant polaire protique, mais peut également comprendre un mélange de deux, trois, voire plus, solvants polaires protiques.

Dans ce qui précède et ce qui suit, l'expression "solvant polaire protique" est prise dans son acceptation habituelle, à savoir qu'elle désigne un solvant qui possède un moment dipolaire permanent non nul et qui possède au moins un atome d'hydrogène lié à un hétéroatome, de telle sorte que ce solvant peut échanger un ou plusieurs protons avec les composés qui sont dissous dans ce solvant.

Le ou l'un des solvants polaires protiques est l'eau.

L'eau peut, par exemple, être de l'eau déminéralisée, de l'eau distillée ou encore de l'eau déionisée.

Le solvant polaire protique peut, notamment, être un alcool.

L'alcool est, avantageusement, un alcool, linéaire ou ramifié, répondant à la formule brute $C_nH_{2n+2}O$, avec $1 \leq n \leq 5$.

La solution préparée lors de l'étape (a) comprend également au moins un tensioactif. Comme déjà précisé ci-avant, en s'adsorbant aux interfaces gaz/liquide des films de solution formant la structure alvéolaire de la mousse aqueuse, le tensioactif améliore la stabilité de cette mousse aqueuse.

Comme explicité ci-dessus pour le(s) composé(s) gélifiant(s) et le(s) solvant(s) polaire(s) protique(s), la solution peut ne comprendre qu'un seul tensioactif, mais peut également comprendre un mélange de deux, trois, voire plus, tensioactifs.

Le tensioactif peut être choisi parmi un tensioactif anionique, un tensioactif cationique et un tensioactif non-ionique.

Dans le cas où le tensioactif est un tensioactif anionique, il peut notamment être choisi parmi les sels de sodium, ou encore les sels de potassium, à longue chaîne carbonée, l'octylsulfate de sodium, le décylsulfate de sodium ou le lauryléthersulfate de sodium.

Dans le cas où le tensioactif est un tensioactif cationique, il peut notamment être choisi parmi les sels d'ammonium à longue chaine carbonée, tels qu'un sel de dodécyltriméthylammonium.

Dans le cas où le tensioactif est un tensioactif non-ionique, il peut notamment être polymérique et, en particulier, l'alcool polyvinylique (PVA).

Des exemples de tensioactifs susceptibles d'être mis en oeuvre dans la solution préparée lors de l'étape (a) sont notamment commercialisés par la société Eau & Feu sous la référence DP-SF/2 ou encore par la société Corda Uniser sous la référence Retofoam R2. Comme on le verra dans les exemples, la référence DP-SF/2 couvre un mélange de tensioactifs anioniques avec un tensioactif non-ionique.

Dans le procédé selon l'invention, la solution préparée à l'étape (a) comprend, en outre, au moins un polysaccharide azoté et, le cas échéant, au moins un composé permettant la dissolution dudit polysaccharide azoté dans la solution.

Ce polysaccharide azoté peut notamment être un chitosan.

Dans une variante préférentielle, le polysaccharide azoté est un chitosan, ce composé étant également connu sous la terminologie de "chitosane".

Un chitosan est un polysaccharide obtenu par N-déacétylation chimique ou enzymatique de la chitine, la chitine étant elle-même un polysaccharide azoté naturel produit à partir de champignons ou de carapace de mollusques marins.

La N-déacétylation chimique de la chitine consiste à hydrolyser, en milieu basique, tout ou partie des fonctions amide de type $-NH-COCH_3$ présentes dans la structure de la chitine, en fonctions amine $-NH_2$.

Le chitosan est donc un polysaccharide formé de la distribution aléatoire d'unités N-déacétylées de D-glucosamine (comprenant une fonction $-NH_2$) et d'unités N-acétylées de N-acétyl-D-glucosamine (comprenant une fonction $-NHCOCH_3$).

Le degré de N-déacétylation (exprimé en pourcentage et noté DD) du chitosan est défini par le nombre d'unités N-déacétylées (fonctions $-NH_2$) divisé par le nombre total d'unités N-déacétylées et d'unités N-acétylées (fonctions $-NH_2$ + fonctions $-NHCOCH_3$) dans ce polysaccharide.

La frontière entre chitosan et chitine correspond à un degré de N-déacétylation DD de 50%. En d'autres termes, lorsque DD $\leq$ 50, on est en présence de chitine, tandis que lorsque DD > 50, on est en présence de chitosan.

Pour simplifier la terminologie utilisée dans la présente demande de brevet, le terme "chitosan" couvre non seulement le chitosan (avec DD > 50), mais également la chitine (avec DD $\leq$ 50).

Ainsi, le chitosan mis en oeuvre dans le cadre de la présente invention répond à la formule développée suivante (I) :

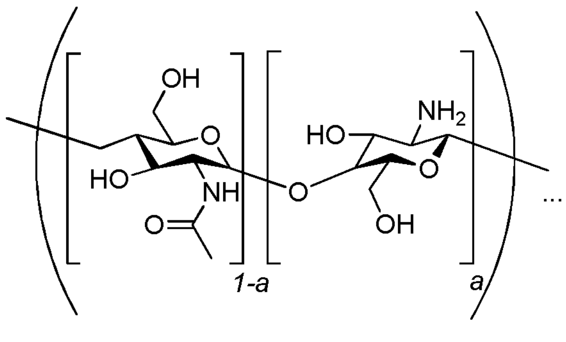

(I)

avec *a*, qui correspond au nombre d'unités N-déacétylées, tel que
$0 \leq a \leq 1$.

Dans une variante avantageuse de l'invention, le chitosan répond à la formule (I) ci-dessus dans laquelle a est tel que $0{,}5 < a \leq 1$.

Dans une variante préférentielle de l'invention, le chitosan répond à la formule (I) ci-dessus dans laquelle $\alpha$ est tel que $0{,}75 \leq a \leq 1$.

Lorsque le ou les polysaccharides azotés ne se dissolvent pas convenablement dans la solution, ce qui est en général le cas lorsque le pH de cette solution a une valeur supérieure ou égale à 7, la solution comprend, en outre, au moins un composé additionnel permettant d'abaisser le pH de la solution à une valeur inférieure à 7.

De manière inattendue et surprenante, on observe que la fabrication d'une mousse aqueuse selon le procédé de l'invention, à partir d'une solution acide, permet d'obtenir une mousse aqueuse particulièrement stable, contrairement ce qu'il est couramment admis.

Ce composé additionnel permettant la dissolution du ou des polysaccharides azotés dans la solution peut être choisi parmi un acide inorganique, un acide organique et un mélange de deux ou plusieurs de ces acides.

Dans le cas où le composé additionnel est un acide inorganique, il peut notamment être choisi parmi l'acide chlorhydrique (HCl), l'acide bromhydrique (HBr), l'acide fluorhydrique (HF), l'acide sulfurique ($H_2SO_4$) et l'acide phosphorique ($H_3PO_4$).

Dans le cas où le composé additionnel est un acide organique, il peut notamment être choisi parmi un acide carboxylique répondant à la formule brute $C_mH_{2m+1}COOH$ avec $0 \leq m \leq 5$ et un acide dicarboxylique répondant à la formule brute $HOOC(CH_2)_mCOOH$ avec $0 \leq m \leq 5$.

Dans une variante avantageuse, l'acide organique peut être l'acide acétique, de formule $CH_3COOH$ (m=2).

Dans une variante avantageuse de l'invention, la solution préparée à l'étape (a) comprend les proportions massiques suivantes, données par rapport à la masse du ou des solvants polaires protiques :

- de 1% à 20% du ou des composants gélifiants et du ou des polysaccharides azotés,
- de 5% à 25% du ou des tensioactifs, et
- de 0% à 10% du ou des composés permettant la dissolution du polysaccharide azoté dans la solution.

Après l'étape (a) de préparation de la solution comprenant au moins un tensioactif, au moins un solvant polaire protique, au moins un composé gélifiant choisi parmi un polysaccharide non azoté et de la gélatine et au moins un polysaccharide azoté et, de manière optionnelle, au moins un composé permettant la dissolution du ou des polysaccharides azotés dans ladite solution, on réalise l'étape (b) du procédé de fabrication selon l'invention qui consiste à mettre en contact la solution ainsi préparée à l'étape (a) avec un gaz sous pression, également appelé gaz vecteur, moyennant quoi un mélange diphasique est obtenu.

Cette mise en contact de la solution avec ce gaz sous pression, ou gaz vecteur, permet le mélange, par bullage, de la solution avec ledit gaz et l'obtention du mélange diphasique correspondant. Cette mise en contact du gaz avec la solution est typiquement réalisée dans un dispositif mélangeur permettant d'homogénéiser la phase liquide formée par la solution avec la phase gazeuse formée par les bulles de gaz et de former un mélange diphasique.

Le gaz peut être choisi parmi l'argon (Ar), l'hélium (He), le diazote ($N_2$), le dioxygène ($O_2$), le dihydrogène ($H_2$), le dioxyde de carbone ($CO_2$), le protoxyde d'azote ($N_2O$), le méthane ($CH_4$) et le mélange d'au moins deux de ces gaz.

A titre d'exemple de mélange de gaz, on peut bien évidemment citer l'air qui correspond à un mélange de $N_2$, $O_2$ et $CO_2$.

Quant à l'étape (c) du procédé de fabrication selon l'invention, elle consiste à injecter le mélange diphasique, par exemple sur une surface ou un support, moyennant quoi, après détente ou dispersion du gaz présent dans le mélange diphasique, la mousse aqueuse stable et autoportante est obtenue.

Cette étape (c) peut être réalisée après l'étape (b) d'obtention du mélange diphasique. La mise en contact de la solution avec le gaz sous pression pour l'obtention du mélange diphasique, puis l'injection de ce mélange diphasique, peuvent alors être réalisées au moyen d'un dispositif tel qu'un système à gaz pressurisé du type siphon à crème ou encore au moyen d'un générateur à air surpressé.

Mais l'étape (c) peut également être réalisée en même temps que l'étape (b) d'obtention du mélange diphasique : les étapes (b) et (c) sont alors concomitantes et peuvent être, par exemple, réalisées au moyen d'un dispositif tel qu'un générateur à fritté.

L'invention se rapporte, en deuxième lieu, à une mousse aqueuse telle qu'obtenue, ou susceptible d'être obtenue, par le procédé de fabrication qui vient d'être décrit, étant précisé que les caractéristiques avantageuses de ce procédé peuvent être prises seules ou en combinaison.

La mousse aqueuse selon l'invention se distingue, en particulier, par les trois caractéristiques cumulatives suivantes :

- une valeur de foisonnement F minimale supérieure ou égale à 3, traduisant le fait que la mousse aqueuse présente une structure alvéolaire aérée,
- un affaissement qui, mesuré une heure après le dépôt de la mousse aqueuse dans une éprouvette graduée, est inférieur ou égal à 15%, traduisant une stabilité de la mousse aqueuse dans le temps, et
- une absence d'affaissement, tel que mesuré une heure après dépôt sur une surface en l'absence de support (de type éprouvette ou tente), d'un amas de mousse aqueuse présentant un diamètre de 1,50 m et une hauteur de 50 cm, signifiant que la mousse aqueuse présente des propriétés autoportantes,

ainsi que, de manière complémentaire et avantageuse,

- une baisse de la concentration en espèces chimiques, et notamment en cations métalliques, présentes dans la phase liquide de drainage par rapport à la concentration en espèces chimiques présentes dans la solution, traduisant une capacité certaine à retenir ces espèces chimiques et donc à réduire la diffusion de telles espèces dans la phase liquide de drainage, signifiant que la mousse aqueuse présente des propriétés complexantes.

La solution comprenant, en outre, au moins un polysaccharide azoté et, le cas échéant, au moins un composé permettant la dissolution du polysaccharide azoté dans la solution, la mousse aqueuse présente des propriétés complexantes particulièrement améliorées.

L'invention se rapporte, en troisième lieu, à une utilisation de la mousse aqueuse telle que décrite ci-dessus.

La mousse aqueuse peut être utilisée dans de nombreux domaines, et notamment :

- dans le domaine de la décontamination, et plus particulièrement dans le domaine de la décontamination nucléaire,
- dans le domaine de la purification d'effluents,
- dans le domaine du confinement d'engins explosifs ou suspectés comme tels, ou encore
- dans le domaine du désamorçage d'engins explosifs ou suspectés comme tels.

La mousse aqueuse peut être utilisée pour complexer au moins un métal sous forme cationique et ce, dans de nombreux domaines, et notamment dans les domaines qui sont listés ci-dessus.

Ce métal peut être choisi dans une large gamme de métaux.

Dans une variante avantageuse de l'invention, le métal peut être choisi parmi un métal de transition, un lanthanide et un actinide et, avantageusement, parmi un métal de transition et un lanthanide.

Lorsque le métal est un métal de transition, il peut être choisi parmi le scandium Sc, le titane Ti, le vanadium V, le chrome Cr, le manganèse Mn, le fer Fe, le cobalt Co, le nickel Ni, le cuivre Cu, le zinc Zn, le zirconium Zr, le niobium Nb, l'argent Ag, le hafnium Hf, le tantale Ta, l'or Au et le mercure Hg.

Lorsque le métal est un lanthanide, il peut être choisi parmi le néodyme Nd, l'europium Eu, le gadolinium Gd et l'ytterbium Yb.

D'autres avantages et caractéristiques de la présente invention ressortiront plus clairement de la description qui suit et qui se rapporte à des modes de réalisation particuliers de l'invention, en particulier à la fabrication de différentes mousses aqueuses, certaines conformes à l'invention et d'autres de référence ou comparatives, ainsi leurs évaluations respectives en termes de stabilité, de propriétés complexantes et de propriétés autoportantes.

Bien entendu, ces modes de réalisation particuliers de l'invention, qui sont notamment décrits en relation avec les figures 1 et 2 annexées, ne sont donnés qu'à titre illustratif et ne constituent en aucune manière une limitation de l'objet de cette invention.

## BRÈVE DESCRIPTION DES DESSINS

La figure 1 illustre l'évolution, en fonction du temps (noté t et exprimé en min), de l'affaissement (noté Aff. et exprimé en %) des amas des mousses aqueuses de référence M1, conforme à l'invention M2 et comparative C1.

La figure 2 est un histogramme illustrant la distribution de la concentration résiduelle en cations $Cu^{2+}$, $Zn^{2+}$ et $Co^{2+}$ dans les phases liquides de drainage des mousses aqueuses selon l'invention M3 et de référence M4, respectivement préparées à partir des solutions S3 et S4, cette concentration résiduelle étant notée $C_r$ et étant exprimée en % par rapport à la concentration initiale de ces cations dans les solutions S3 et S4.

## EXPOSÉ DÉTAILLÉ DE MODES DE RÉALISATION PARTICULIERS

### Évaluation de la stabilité de mousses aqueuses

Trois mousses aqueuses, notées M1, M2 et C1, ont été fabriquées, M1 étant une mousse aqueuse de référence, M2 étant une mousse aqueuse conforme à l'invention et C1 étant une mousse aqueuse comparative.

Pour chacune de ces trois mousses M1, M2 et C1, on a évalué la structure ainsi que la stabilité par les mesures respectives de foisonnement F et d'affaissement selon les modalités précisées ci-après.

Le tensioactif mis en oeuvre est commercialisé par la société Eau & Feu sous la référence DP-SF/2. Ce tensioactif DP-SF/2 est formé par un mélange de tensioactifs anioniques (de 1 à 2% en masse d'octylsulfate de sodium, de 2 à 3% en masse de décylsulfate de sodium et de 1 à 2% en masse de lauryléthersulfate de sodium) et d'un tensioactif non-ionique dans de l'eau (76-77% en masse), du propylène glycol (5 à 6% en masse) et de l'éther monobutylique de propylène glycol (8 à 9% en masse).

<u>Fabrication et évaluation de la mousse aqueuse M1 (de référence)</u>

Dans un erlenmeyer de 500 mL, on introduit 20 g de tensioactif DP-SF/2, 250 mL d'eau distillée puis 3,75 g d'agar-agar. La solution, notée S1, est alors placée sous agitation à une température de 90°C jusqu'à ce qu'elle soit totalement homogène. Le chauffage est ensuite stoppé puis, lorsque la température de la solution atteint 60°C, la solution S1 est transvasée dans un siphon à crème de 500 mL.

Après fermeture du siphon, on visse une cartouche de protoxyde d'azote dans l'emplacement prévu à cet effet. Le siphon est alors agité manuellement de haut en bas pendant environ 15 secondes pour l'obtention d'un mélange diphasique homogène.

Le siphon est ensuite retourné (canule vers le bas) au-dessus d'une éprouvette graduée de 250 mL qui a été préalablement tarée, pour le calcul du foisonnement F.

On procède alors à l'injection du mélange diphasique, par application d'une pression délicate sur le levier du siphon, dans l'éprouvette graduée jusqu'à atteindre une hauteur de mousse aqueuse M1 de 230 mL.

L'éprouvette remplie est alors pesée et la masse de mousse aqueuse M1 correspondante est déterminée. Le volume de la solution S1 injectée est alors calculé en divisant la masse de la mousse aqueuse M1 par la masse volumique de cette mousse aqueuse M1 qui est de 1,0. La valeur de foisonnement F est ensuite calculée : F est de 4,1 pour la mousse aqueuse M1.

L'évolution de la hauteur de mousse aqueuse M1 est suivie sur une période d'une heure. On observe qu'au bout d'une heure, un volume de 30 mL de mousse aqueuse M1 a été perdu, ce qui correspond à un affaissement de 13%.

M1 présente donc une structure alvéolaire aérée (foisonnement supérieure ou égal à 3) et répond également à la définition d'une mousse aqueuse stable au sens de la présente invention (affaissement inférieur ou égal à 15%).

Fabrication et évaluation de la mousse aqueuse M2 (selon l'invention)

Dans un premier erlenmeyer, on introduit 100 mL d'eau distillée contenant 0,3% en masse d'acide acétique, puis 0,75 g de chitosan provenant de carapace de crevette et présentant un degré de N-déacétylation DD supérieur à 75%. L'ensemble est alors placé sous agitation et chauffé à 80°C jusqu'à homogénéisation complète. On ajoute alors 2,25 g d'agar-agar pour former une première solution aqueuse, qui est alors chauffée, sous agitation, à 95°C jusqu'à homogénéisation. La température est ensuite régulée thermiquement à 80°C pendant 1 h.

Dans un deuxième erlenmeyer, on introduit 100 mL d'eau distillée contenant 0,3% en masse d'acide acétique, puis 16 g de tensioactif DP-SF/2 pour former une deuxième solution aqueuse.

100 mL de cette deuxième solution aqueuse sont alors introduits dans le premier erlenmeyer. La solution, ainsi formée par les première et deuxième solutions aqueuses, et notée S2, est placée sous agitation mécanique (type ultra-turax) jusqu'à homogénéisation totale. Le chauffage est ensuite stoppé puis, lorsque la température de la solution atteint 60°C, la solution S2 est transvasée dans un siphon à crème de 500 mL.

Après fermeture du siphon, on visse une cartouche de protoxyde d'azote dans l'emplacement prévu à cet effet. Le siphon est alors agité manuellement de haut en bas pendant environ 15 secondes pour l'obtention d'un mélange diphasique homogène.

Comme décrit ci-dessus, le siphon est ensuite retourné au-dessus d'une éprouvette graduée de 250 mL (préalablement tarée).

On procède alors à l'injection du mélange diphasique, par application d'une pression délicate sur le levier du siphon, dans l'éprouvette graduée jusqu'à atteindre une hauteur de mousse aqueuse M2 de 155 mL.

L'éprouvette ainsi remplie est alors pesée. Le volume de solution S2 injectée est déduit de la masse mesurée comme indiqué précédemment et la valeur de foisonnement F est déterminée : F est de 3,1 pour la mousse aqueuse M2.

L'évolution de la hauteur de mousse aqueuse M2 est suivie sur une période d'une heure. On observe qu'au bout d'une heure, un volume de 19 mL de mousse aqueuse M2 a été perdu, ce qui correspond à un affaissement de 12,2%.

M2 présente donc une structure alvéolaire aérée (foisonnement supérieure ou égal à 3) et répond également à la définition d'une mousse aqueuse stable au sens de la présente invention (affaissement inférieur ou égal à 15%).

Fabrication et évaluation de la mousse aqueuse C1 (comparative)

Dans un erlenmeyer de 500 mL, on introduit 20 g de tensioactif DP-SF/2 et 250 mL d'eau distillée. La solution, notée SC1, est alors placée sous agitation jusqu'à la dissolution totale du tensioactif. La solution SC1 est ensuite transvasée dans un siphon à crème de 500 mL.

Après fermeture du siphon et mise en place d'une cartouche de protoxyde d'azote, le siphon est agité manuellement de haut en bas pendant environ 15 secondes.

Comme décrit ci-dessus, le siphon est ensuite retourné au-dessus d'une éprouvette graduée de 250 mL (préalablement tarée).

On procède alors à l'injection du mélange diphasique, par application d'une pression délicate sur le levier du siphon, dans l'éprouvette graduée jusqu'à atteindre une hauteur de mousse aqueuse C1 de 230 mL.

L'éprouvette ainsi remplie est alors pesée. Le volume de solution SC1 injectée est déduit de la masse mesurée comme indiqué précédemment et la valeur de foisonnement F est déterminée : F est de 5,7 pour la mousse aqueuse C1.

L'évolution de la hauteur de mousse aqueuse C1 est suivie sur une période d'une heure. On observe qu'au bout d'une heure, un volume de 58 mL de mousse aqueuse C1 a été perdu, ce qui correspond à un affaissement de 25,2%.

Si C1 présente donc une structure alvéolaire aérée (foisonnement supérieure ou égal à 3), C1 ne répond pas à la définition d'une mousse aqueuse stable au sens de la présente invention (affaissement nettement supérieur à 15%).
L'évolution de l'affaissement des différentes de mousses aqueuses M1, M2 et C1, tel qu'observé au cours de l'heure qui a suivi leur dépôt respectif dans l'éprouvette graduée, est illustrée à la figure 1.
Les courbes de la figure 1 mettent clairement en évidence que les mousses aqueuses M1 de référence et M2 selon l'invention présentent une stabilité nettement supérieure à la stabilité de la mousse aqueuse C1 comparative.

**Évaluation des propriétés complexantes de mousses aqueuses**

Deux mousses aqueuses, notées M3 et M4, ont été fabriquées, la mousse aqueuse M3 selon l'invention étant obtenue à partir de la solution S3 et la mousse aqueuse M4 de référence étant obtenue à partir de la solution S4.
Pour évaluer les propriétés complexantes respectives de ces mousses aqueuses M3 et M4, on a respectivement réalisé des solutions S3 et S4 spécifiques, dans lesquelles un sel métallique a été ajouté (en l'espèce et alternativement, $CuCl_2$, $ZnCl_2$ et $Co(NO_3)_2,6H_2O$), de manière à atteindre une concentration initiale en cation métallique ($C_U^{2+}$, $Zn^{2+}$ ou $Co^{2+}$) de 2,5 g/L dans les solutions S3 et S4.
On a ensuite évalué, par spectroscopie UV-visible, la concentration résiduelle en cation métallique ($Cu^{2+}$, $Zn^{2+}$ ou $Co^{2+}$) dans la phase liquide de drainage collectée sur une période de 15 min après la formation de chacune des mousses aqueuses M3 et M4. La comparaison du signal ainsi obtenu avec les signaux obtenus au préalable avec des solutions-étalons a permis de déterminer cette concentration résiduelle.

Préparation de la solution S3

Dans un premier erlenmeyer, on introduit 150 mL d'eau distillée contenant 5% en masse d'acide acétique, puis 1,125 g de chitosan provenant de carapace de crevette et présentant un degré de N-déacétylation DD supérieur à 75%. L'ensemble est alors placé sous agitation et chauffé à 80°C jusqu'à homogénéisation complète. On ajoute alors 3,375 g d'agar-agar pour former une première solution aqueuse, qui est alors chauffée, sous agitation, à 95°C jusqu'à homogénéisation. La température est ensuite régulée thermiquement à 80°C pendant 1 h.
Dans un deuxième erlenmeyer, on introduit 150 mL d'eau distillée contenant 5% en masse d'acide acétique, puis 24 g de tensioactif DP-SF/2 pour former une deuxième solution aqueuse.
150 mL de cette deuxième solution aqueuse sont alors introduits dans le premier erlenmeyer. La solution S3 formée par les première et deuxième solutions aqueuses est placée sous agitation mécanique (type ultra-turax) jusqu'à homogénéisation totale. Le chauffage est ensuite stoppé.

Préparation de la solution S4

Dans un erlenmeyer, on introduit 300 mL d'eau distillée contenant 5% en masse d'acide acétique, puis 24 g de tensioactif DP-SF/2 et 4,5 g d'agar-agar. La solution obtenue, notée S4, est alors chauffée, sous agitation, à 95°C jusqu'à homogénéisation. La température est ensuite régulée thermiquement à 60°C pendant 1 h. Puis, le chauffage est arrêté.

Évaluation des propriétés complexantes vis-à-vis de $Cu^{2+}$ des mousses aqueuses M3 et M4

**[0126]** * 100 mL de la solution S3 ainsi préparée sont réservés afin de constituer des solutions dites "solutions-étalons" de $CuCl_2$.
Pour ce faire, la solution S3 est diluée une première fois à 50% par ajout de 100 mL d'eau distillée aux 100 mL de cette solution S3. On ajoute alors 1,058 g de $CuCl_2$ à cette solution diluée. On obtient ainsi 200 mL d'une solution-mère qui comprend une concentration initiale en cations $Cu^{2+}$ de 2,5 g/L.
La solution-mère ainsi obtenue est alors fractionnée. Une fraction de la solution-mère est conservée tandis que les autres fractions sont diluées, par addition d'eau, de manière à obtenir des solutions-filles de concentrations initiales respectives en cations $Cu^{2+}$ de 2 g/L, 1,5 g/L, 1,25 g/L, 1 g/L, 0,75 g/L, 0,5 g/L et 0,25 g/L.
Ces différentes fractions de solution-mère et de solutions-filles, préparées à partir de la solution S3, sont ensuite examinées par spectrométrie UV visible sur une gamme de longueurs d'onde de 600 nm à 1000 nm. Les valeurs d'absorbance correspondant au signal du cuivre sont relevées de manière à obtenir une droite d'étalonnage de la concentration en cations $Cu^{2+}$ pour la solution S3.
Les manipulations et méthode de mesure des valeurs d'absorbance qui viennent d'être décrites sont reproduites dans les mêmes conditions opératoires, à l'exception du remplacement de la solution S3, par la solution S4. On obtient alors également une droite d'étalonnage de la concentration en cations $Cu^{2+}$ pour la solution S4.
**[0131]** * 100 mL de la solution S3 ainsi préparée sont prélevés. À cette solution S3, on ajoute 1,058 g de $CuCl_2$, de

manière à obtenir une solution d'une concentration de 5 g/L en cations $Cu^{2+}$.

La solution ainsi obtenue est alors transvasée dans un siphon à crème de 500 mL. Après fermeture du siphon, on visse une cartouche de protoxyde d'azote dans l'emplacement prévu à cet effet. Le siphon est alors agité manuellement de haut en bas pendant environ 15 secondes pour l'obtention d'un mélange diphasique homogène.

Le siphon est ensuite retourné (canule vers le bas) au-dessus d'un erlenmeyer muni d'un fritté faisant office de filtre à liquide. On procède alors à l'injection du mélange diphasique, par application d'une pression délicate sur le levier du siphon, et l'on obtient un dépôt de mousse aqueuse M3 sur le fritté.

On laisse alors la phase liquide de drainage s'écouler dans l'erlenmeyer à travers le fritté pendant une durée de 15 min après le dépôt de la mousse aqueuse M3. La phase liquide de drainage est alors prélevée, diluée une fois à 50% (de manière à obtenir un taux de dilution similaire à celui des solutions-étalons), puis analysée par spectrométrie UV visible (entre 600 nm et 1000 nm). La valeur d'absorbance correspondant au signal du cuivre est relevée puis comparée à la droite d'étalonnage préalablement établie.

On relève, qu'après une durée de 15 min, la concentration résiduelle en cations $Cu^{2+}$, dans la phase liquide de drainage, est de 1,29 g/L, ce qui correspond à 52% de la concentration en cations $Cu^{2+}$ dans la solution S3 avant injection. En d'autres termes, la mousse aqueuse M3 a permis de retenir 48% de cations $Cu^{2+}$.

Par application d'un protocole similaire réalisé à partir de 100 mL de la solution S4, à la place de la solution S3, on obtient une concentration résiduelle en cations $Cu^{2+}$, dans la phase liquide de drainage, de 1,72 g/L, ce qui correspond à 69% de la concentration en cations $Cu^{2+}$ dans la solution S4 avant injection. En d'autres termes, la mousse aqueuse M4 a permis de retenir 31% de cations $Cu^{2+}$.

Évaluation des propriétés complexantes vis-à-vis de $Zn^{2+}$ des mousses aqueuses M3 et M4

**[0137]** * Pour l'évaluation des propriétés complexantes de la mousse aqueuse M3 vis-à-vis de $Zn^{2+}$, on a réalisé une solution-mère et des solutions-filles d'étalonnage à partir de la solution S3.

Pour ce faire, on a reproduit un protocole similaire à celui décrit ci-dessus pour l'évaluation des propriétés complexantes vis-à-vis des cations $Cu^{2+}$.

Une solution-mère comprenant une concentration initiale de 2,5 g/L en cations $Zn^{2+}$ est préparée par ajout de 1,042 g de $ZnCl_2$ à la solution S3 préalablement diluée à 50% à l'aide d'eau déionisée. Les solutions-filles sont ensuite préparées selon un protocole similaire à celui décrit précédemment. Ces solutions-filles sont ensuite re-diluées : de l'eau déionisée est ajoutée dans chaque solution-fille, jusqu'à ce que leur volume respectif soit 10 fois plus grand que leur volume initial (cette dilution permet d'éviter la saturation du signal UV-visible du zinc).

Les valeurs d'absorbance correspondant au signal du zinc mesurées, par spectrométrie UV visible sur une gamme de longueurs d'onde de 200 nm à 300 nm, pour les différentes fractions de solution-mère et de solutions-filles, ont permis d'établir une droite d'étalonnage.

**[0141]** * 1,042 g de $ZnCl_2$ ont été ajoutés à 100 mL de la solution S3, de manière à obtenir une solution d'une concentration initiale de 5 g/L en cations $Zn^{2+}$.

On a ensuite reproduit le protocole de fabrication de la mousse aqueuse tel que décrit ci-dessus et procédé au prélèvement de la phase liquide de drainage écoulée après 15 min après dépôt de la mousse aqueuse sur le frité et recueillie dans l'erlenmeyer.

Un volume de cette phase liquide de drainage a été prélevé puis dilué. Pour ce faire, ce volume a été multiplié par 20 par ajout de la quantité adéquate d'eau déionisée. De cette façon, la phase liquide de drainage subit le même facteur de dilution que les solutions-étalons. La phase liquide de drainage diluée est ensuite analysée par spectrométrie UV visible (entre 200 nm et 3000 nm). La valeur d'absorbance correspondant au signal du zinc a été relevée puis comparée à la droite d'étalonnage préalablement établie.

On observe, qu'après une durée de 15 min, la concentration résiduelle en cations $Zn^{2+}$, dans la phase liquide de drainage, est de 1,40 g/L, ce qui correspond à 56% de la concentration en cations $Zn^{2+}$ dans la solution S3 avant injection. En d'autres termes, la mousse aqueuse M3 a permis de complexer 44% de cations $Zn^{2+}$.

Par application d'un protocole similaire réalisé à partir de 100 mL de la solution S4, à la place de la solution S3, on obtient une concentration résiduelle en cations $Zn^{2+}$, dans la phase liquide de drainage, de 1,49 g/L, ce qui correspond à 60% de la concentration en cations $Zn^{2+}$ dans la solution S4 avant injection. En d'autres termes, la mousse aqueuse M4 a permis de complexer 40% de cations $Zn^{2+}$.

Évaluation des propriétés complexantes vis-à-vis de $Co^{2+}$ des mousses aqueuses M3 et M4

**[0146]** * Pour l'évaluation des propriétés complexantes de la mousse aqueuse M3 vis-à-vis de cations $Co^{2+}$, on a réalisé une solution-mère et des solutions-filles d'étalonnage à partir de la solution S3.

Pour ce faire, on a reproduit un protocole similaire à celui décrit ci-dessus pour l'évaluation des propriétés complexantes vis-à-vis des cations $Cu^{2+}$.

Une solution-mère comprenant une concentration initiale de 2,5 g/L en cations $Co^{2+}$ est préparée par ajout de 2,468 g de $Co(NO_3)_2,6H_2O$ à la solution S3 préalablement diluée à 50% à l'aide d'eau déionisée. Les solutions-filles sont ensuite préparées selon un protocole similaire à celui décrit précédemment. Ces solutions-filles sont ensuite re-diluées : de l'eau déionisée est ajoutée dans chaque solution-fille, jusqu'à ce que leur volume respectif soit 5 fois plus grand que leur volume initial (cette dilution permet d'éviter la saturation du signal UV-visible du cobalt).

Les valeurs d'absorbance correspondant au signal du cobalt mesurées, par spectrométrie UV visible sur une gamme de longueurs d'onde de 250 nm à 360 nm, pour les différentes fractions de solution-mère et de solutions-filles, ont permis d'établir une droite d'étalonnage.

[0150] * 2,468 g de $Co(NO_3)_2,6H_2O$ ont été ajoutés à 100 mL de la solution S3, de manière à obtenir une solution d'une concentration initiale de 5 g/L en cations $Co^{2+}$.

On a ensuite reproduit le protocole de fabrication de la mousse aqueuse tel que décrit ci-dessus et procédé au prélèvement de la phase liquide de drainage écoulée après 15 min après dépôt de la mousse aqueuse sur le frité et recueillie dans l'erlenmeyer.

Un volume de cette phase liquide de drainage a été prélevé puis dilué. Pour ce faire, ce volume a été multiplié par 10 par ajout de la quantité adéquate d'eau déionisée. De cette façon, la phase liquide de drainage subit le même facteur de dilution que les solutions-étalons. La phase liquide de drainage diluée est ensuite analysée par spectrométrie UV visible (entre 250 nm et 360 nm). La valeur d'absorbance correspondant au signal du cobalt a été relevée puis comparée à la droite d'étalonnage préalablement établie.

On observe, qu'après une durée de 15 min, la concentration résiduelle en cations $Co^{2+}$, dans la phase liquide de drainage, est de 1,00 g/L, ce qui correspond à 40% de la concentration en cations $Co^{2+}$ dans la solution S3 avant injection. En d'autres termes, la mousse aqueuse M3 a permis de complexer 60% de cations $Co^{2+}$.

Par application d'un protocole similaire réalisé à partir de 100 mL de la solution S4, à la place de la solution S3, on obtient une concentration résiduelle en cations $Co^{2+}$, dans la phase liquide de drainage, de 1,99 g/L, ce qui correspond à 80% de la concentration en cations $Co^{2+}$ dans la solution S4 avant injection. En d'autres termes, la mousse aqueuse M4 n'a permis de complexer que 20% de cations $Co^{2+}$.

Les concentrations résiduelles en cations $Cu^{2+}$, $Zn^{2+}$ et $Co^{2+}$ dans les phases liquides de drainage provenant des différentes mousses M3 et M4 sont reportées sur la figure 2.

Cette figure 2 met clairement en évidence que les mousses aqueuses M3 et M4 présentent des propriétés complexantes, puisque leurs concentrations résiduelles sont toutes inférieures aux concentrations initiales.

La figure 2 montre également que les propriétés complexantes d'une mousse aqueuse sont améliorées par la présence de chitosan dans la solution (solution S3) et ce, quel que soit le cation considéré.

La présence de chitosan améliore, de manière particulièrement significative, la complexation, et donc la rétention ou séquestration, des cations $Co^{2+}$, ce qui présente un intérêt indéniable pour toute application visant à lutter contre la pollution au cobalt, notamment la décontamination de sources ionisantes à base de cobalt 60.

**Évaluation des propriétés autoportantes de mousses aqueuses**

Deux mousses aqueuses, notées M5 et C5, ont été fabriquées, M5 étant un mousse aqueuse de référence et C5 étant une mousse aqueuse comparative.

Pour évaluer les propriétés autoportantes de chacune de ces mousses aqueuses M5 et C5, on a évalué le comportement d'un amas de chacune d'elles après dépôt sur une surface en l'absence de tout support.

<u>Fabrication et évaluation de la mousse aqueuse M5 (de référence)</u>

Dans une cuve contenant 4 L d'eau, on introduit 240 g de tensioactif DP-SF/2 et 60 g d'agar-agar. La solution obtenue, notée S5, est alors placée sous agitation et chauffée à une température de 95°C jusqu'à ce qu'elle soit totalement homogène. La température est ensuite régulée thermiquement à 58°C jusqu'à l'injection.

La solution S5 est ensuite introduite dans un générateur de mousse à air surpressé commercialisé par la société ERPI. La mise en contact de la solution S5 avec un gaz sous pression, la formation du mélange diphasique et l'injection de ce mélange diphasique sont assurés concomitamment par une diffusion de la solution S5 sous forme de spray au travers de grilles métalliques sur lesquelles un flux d'air constant est appliqué.

Il en résulte la formation d'une mousse aqueuse M5 dont le foisonnement F peut varier de 5 à 80, en fonction des débits de la solution S5, d'une part, et de l'air, d'autre part.

On observe que les films constitutifs de la structure alvéolaire de la mousse aqueuse M5 gélifient lors du refroidissement de cette mousse aqueuse M5.

En effet, la température de gélification dépend de la concentration en agar-agar dans le solvant (ici, l'eau). Or, dans la solution S5, cette concentration en agar-agar étant de 15 g/L de solvant, la température de gélification est de l'ordre de 35°C.

Aussi, à une température inférieure à la température de gélification, et notamment à la température ambiante, on obtient une mousse aqueuse M5 suffisamment élastique pour minimiser son étalement lors de l'injection et ainsi permettre la formation d'un amas, ou monticule, de mousse aqueuse M5 de 70 cm de hauteur pour 2 m de diamètre, soit bien au-delà des dimensions requises pour considérer qu'une mousse aqueuse est autoportante et ce, en l'absence de support.

Cette mousse aqueuse M5 présente l'intérêt de ne pas s'écrouler, ni de drainer, sur une période minimale de 24 h, ce qui en facilite la manipulation et la récupération après usage.

Dans le cas d'une utilisation d'une mousse aqueuse en tant que décontaminant, les propriétés non-drainantes de ladite mousse aqueuse font qu'il n'y aura pas de ruissellement, ni d'infiltration de la phase aqueuse de la mousse aqueuse dans le sol, la mousse aqueuse pouvant, en outre, être facilement récupérée, par exemple par aspiration ou au moyen d'une pelle.

Fabrication et évaluation de la mousse aqueuse C5 (comparative)

Dans une cuve contenant 4 L d'eau, on introduit 240 g de tensioactif DP-SF/2. La solution obtenue, notée SC5, est alors placée sous agitation et à température ambiante jusqu'à homogénéisation totale.

La solution SC5 est ensuite introduite dans un générateur de mousse commercialisé par la société ERPI. La mise en contact de la solution SC5 avec un gaz sous pression, la formation du mélange diphasique et l'injection de ce mélange diphasique sont assurés concomitamment par une diffusion de la solution SC5 sous forme de spray au travers de grilles métalliques sur lesquelles un flux d'air constant est appliqué.

Comme décrit précédemment, il se forme une mousse aqueuse C5 dont le foisonnement F peut varier de 5 à 80, en fonction des débits de la solution SC5, d'une part, et de l'air, d'autre part.

A la différence de la mousse aqueuse M5 décrite ci-dessus, qui se caractérise par d'excellentes propriétés autoportantes et non-drainantes, cette mousse aqueuse C5, qui est fabriquée à partir de la solution SC5 ne comprenant pas de composé gélifiant tel que l'agar-agar, ne permet pas de former des amas de mousse aqueuse qui soient autoportants. En effet, il n'a pas été possible de réaliser un amas, ou monticule, de 70 cm de hauteur pour 2 m de diamètre stable sur une période de 24 h, du fait de l'étalement de l'amas de mousse aqueuse C5 dès la première heure suivant le dépôt. Le ruissellement lié au phénomène de drainage est également intervenu dans les 5 min suivant le dépôt.

**BIBLIOGRAPHIE**

**[1]** US 5,360,828
**[2]** US 5,382,285

**Revendications**

1. Procédé de fabrication d'une mousse aqueuse comprenant les étapes suivantes :

   (a) la préparation d'une solution comprenant au moins un tensioactif et au moins un solvant polaire protique, le solvant polaire protique ou l'un des solvants polaires protiques étant l'eau,
   (b) la mise en contact de la solution préparée à l'étape (a) avec un gaz sous pression, moyennant quoi un mélange diphasique est obtenu, et
   (c) l'injection du mélange diphasique obtenu à l'étape (b), moyennant quoi, après détente ou dispersion du gaz, la mousse aqueuse est obtenue,

   **caractérisé en ce que** la solution comprend, en outre, au moins un polysaccharide azoté et au moins un composé gélifiant choisi parmi un polysaccharide non azoté et de la gélatine.

2. Procédé de fabrication selon la revendication 1, dans lequel la solution comprend, en outre, au moins un composé permettant la dissolution du ou des polysaccharides azotés dans la solution.

3. Procédé de fabrication selon la revendication 1 ou 2, dans lequel les proportions massiques, données par rapport à la masse du ou des solvants polaires protiques, sont les suivantes :

   - de 1% à 20% du ou des composants gélifiants et du ou des polysaccharides azotés,

- de 5% à 25% du ou des tensioactifs, et
- de 0% à 10% du ou des composés permettant la dissolution du polysaccharide azoté dans la solution.

**4.** Procédé de fabrication selon l'une quelconque des revendications 1 à 3, dans lequel le polysaccharide non azoté est choisi parmi l'agar-agar et le carraghénane et est, préférentiellement, l'agar-agar.

**5.** Procédé de fabrication selon l'une quelconque des revendications 1 à 4, dans lequel le polysaccharide azoté est un chitosan.

**6.** Procédé de fabrication selon la revendication 5, dans lequel le chitosan répond à la formule développée suivante (I) :

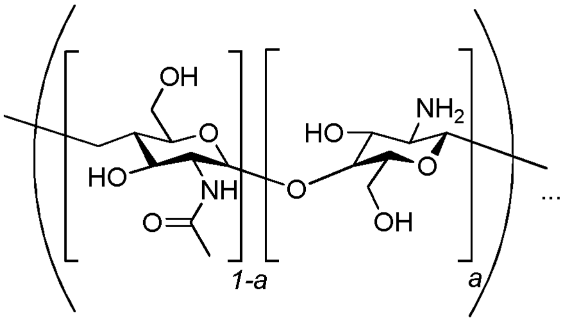

(I)

avec $\alpha$ tel que $0 \leq \alpha \leq 1$, avantageusement $0,5 < \alpha \leq 1$ et, préférentiellement, $0,75 \leq \alpha \leq 1$.

**7.** Procédé de fabrication selon l'une quelconque des revendications 2 à 6, dans lequel le composé permettant la dissolution du ou des polysaccharides azotés dans la solution est choisi parmi un acide inorganique tel que HCl, HBr, HF, $H_2SO_4$ et $H_3PO_4$ et un acide organique tel qu'un acide carboxylique répondant à la formule brute $C_mH_{2m+1}COOH$ avec $0 \leq m \leq 5$ et un acide dicarboxylique répondant à la formule brute $HOOC(CH_2)_mCOOH$ avec $0 \leq m \leq 5$.

**8.** Procédé de fabrication selon l'une quelconque des revendications 1 à 7, dans lequel l'eau est choisie parmi l'eau déminéralisée, l'eau distillée et l'eau déionisée.

**9.** Procédé de fabrication selon l'une quelconque des revendications 1 à 8, dans lequel le tensioactif est choisi parmi un tensioactif anionique tel que l'octylsulfate de sodium, le décylsulfate de sodium et le lauryléthersulfate de sodium, un tensioactif cationique tel qu'un sel de dodécyltriméthylammonium, et un tensioactif non-ionique tel que l'alcool polyvinylique.

**10.** Procédé de fabrication selon l'une quelconque des revendications 1 à 9, dans lequel le gaz mis en oeuvre dans l'étape (b) est choisi parmi Ar, He, $N_2$, $O_2$, $H_2$, $CO_2$, $N_2O$, $CH_4$ et le mélange d'au moins deux de ces gaz, par exemple l'air.

**11.** Procédé de fabrication selon l'une quelconque des revendications 1 à 10, dans lequel les étapes (b) et (c) sont concomitantes.

**12.** Mousse aqueuse obtenue, ou susceptible d'être obtenue, par le procédé de fabrication selon l'une quelconque des revendications 1 à 11.

**13.** Utilisation de la mousse aqueuse selon la revendication 12 pour complexer au moins un métal sous forme cationique.

**14.** Utilisation selon la revendication 13, dans laquelle le métal est choisi parmi un métal de transition tel que Sc, Ti, V, Cr, Mn, Fe, Co, Ni, Cu, Zn, Zr, Nb, Ag, Hf, Ta, Au et Hg, et un lanthanide tel que Nd, Eu, Gd et Yb.

**15.** Utilisation de la mousse aqueuse selon la revendication 12 ou utilisation selon la revendication 13 ou 14 dans le domaine de la décontamination, notamment dans le domaine de la décontamination nucléaire, dans le domaine de la purification d'effluents, ou dans le domaine du confinement ou du désamorçage d'engins explosifs ou suspectés

comme tels.

**Patentansprüche**

1. Verfahren zur Herstellung eines wässrigen Schaums, umfassend die folgenden Schritte:

(a) Herstellung einer Lösung, umfassend mindestens einen grenzflächenaktiven Stoff und mindestens ein protisches polares Lösungsmittel, wobei das protische polare Lösungsmittel oder eines der protischen polaren Lösungsmittel Wasser ist,
(b) Inberührungbringen der in dem Schritt (a) hergestellten Lösung mit einem Gas unter Druck, wodurch eine zweiphasige Mischung erhalten wird, und
(c) Injektion der in dem Schritt (b) erhaltenen zweiphasigen Mischung, wodurch, nach Entspannung oder Dispersion des Gases, der wässrige Schaum erhalten wird, **dadurch gekennzeichnet, dass** die Lösung außerdem mindestens ein stickstoffhaltiges Polysaccharid und mindestens eine gelierende Verbindung, ausgewählt aus einem nicht-stickstoffhaltigen Polysaccharid und Gelatine, umfasst.

2. Herstellungsverfahren nach Anspruch 1, wobei die Lösung außerdem mindestens eine Verbindung umfasst, die das Lösen des oder der stickstoffhaltigen Polysaccharide in der Lösung umfasst.

3. Herstellungsverfahren nach Anspruch 1 oder 2,
wobei die Massenanteile, angegeben im Verhältnis zur Masse des oder der protischen polaren Lösungsmittel, wie folgt sind:

- von 1 % bis 20 % der gelierenden Verbindung oder Verbindungen und des oder der stickstoffhaltigen Polysaccharide,
- von 5 % bis 25 % des oder der grenzflächenaktiven Stoffe, und
- von 0 % bis 10 % der Verbindung oder Verbindungen, die das Lösen des stickstoffhaltigen Polysaccharids in der Lösung gestatten.

4. Herstellungsverfahren nach einem der Ansprüche 1 bis 3, wobei das nicht-stickstoffhaltige Polysaccharid ausgewählt wird aus Agar-Agar und Carraghenan und vorzugsweise Agar-Agar ist.

5. Herstellungsverfahren nach einem der Ansprüche 1 bis 4, wobei das stickstoffhaltige Polysaccharid Chitosan ist.

6. Herstellungsverfahren nach Anspruch 5, wobei das Chitosan die folgende entwickelte Formel (I) aufweist:

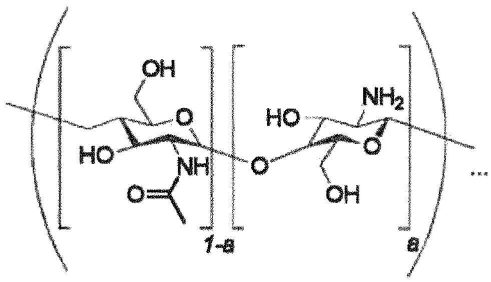

(I)

wobei $\alpha$ derart ist, dass $0 \leq \alpha \leq 1$, vorteilhaft $0,5 < \alpha \leq 1$ und vorzugsweise $0,75 \leq \alpha \leq 1$.

7. Herstellungsverfahren nach einem der Ansprüche 2 bis 6, wobei die Verbindung, die das Lösen des oder der stickstoffhaltigen Polysaccharide in der Lösung gestattet, ausgewählt wird aus einer anorganischen Säure, wie HCl, HBr, HF, $H_2SO_4$ und $H_3PO_4$, und einer organischen Säure, wie einer Carbonsäure mit der Summenformel $C_mH_{2m+1}COOH$, wobei $0 \leq m \leq 5$, und einer Dicarbonsäure mit der Summenformel $HOOC(CH_2)_mCOOH$, wobei $0 \leq m \leq 5$.

8. Herstellungsverfahren nach einem der Ansprüche 1 bis 7, wobei das Wasser ausgewählt wird aus entmineralisiertem Wasser, destilliertem Wasser und entionisiertem Wasser.

9. Herstellungsverfahren nach einem der Ansprüche 1 bis 8, wobei der grenzflächenaktive Stoff ausgewählt wird aus einem anionischen grenzflächenaktiven Stoff, wie Natriumoctylsulfat, Natriumdecylsulfat und Natriumlaurylethersulfat, einem kationischen grenzflächenaktiven Stoff, wie einem Dodecyltrimethylammoniumsalz, und einem nichtionischen grenzflächenaktiven Stoff, wie Polyvinylalkohol.

10. Herstellungsverfahren nach einem der Ansprüche 1 bis 9, wobei das in dem Schritt (b) verwendete Gas ausgewählt wird aus Ar, He, $N_2$, $O_2$, $H_2$, $CO_2$, $N_2O$, $CH_4$ und einer Mischung von mindestens zwei dieser Gase, zum Beispiel Luft.

11. Herstellungsverfahren nach einem der Ansprüche 1 bis 10, wobei die Schritte (b) und (c) gleichzeitig erfolgen.

12. Wässriger Schaum, welcher durch das Herstellungsverfahren nach einem der Ansprüche 1 bis 11 erhalten wird oder erhalten werden kann.

13. Verwendung des wässrigen Schaums nach Anspruch 12, zur Komplexierung mindestens eines Metalls in kationischer Form.

14. Verwendung nach Anspruch 13, wobei das Metall ausgewählt ist aus einem Übergangsmetall, wie Sc, Ti, V, Cr, Mn, Fe, Co, Ni, Cu, Zn, Zr, Nb, Ag, Hf, Ta, Au und Hg, und einem Lanthanid, wie Nd, Eu, Gd und Yb.

15. Verwendung des wässrigen Schaums nach Anspruch 12 oder Verwendung nach Anspruch 13 oder 14, auf dem Gebiet der Dekontamination, insbesondere auf dem Gebiet der nuklearen Dekontamination, auf dem Gebiet der Reinigung von Abwässern oder auf dem Gebiet der Absicherung oder Entschärfung von Sprengkörpern oder als solche verdächtigten Körpern.

## Claims

1. A method for producing an aqueous foam comprising the following steps of:

(a) preparing a solution comprising at least one surfactant and at least one protic polar solvent, the protic polar solvent or one of the protic polar solvents being water,
(b) contacting the solution prepared in step (a) with a pressurised gas, whereby a two-phase mixture is obtained, and
(c) injecting the two-phase mixture obtained in step (b), whereby, after expansion or dispersion of the gas, the aqueous foam is obtained,

**characterised in that** the solution further comprises at least one nitrogenous polysaccharide and at least one gelling compound chosen from a non-nitrogenous polysaccharide and gelatine.

2. The production method according to claim 1, wherein the solution further comprises at least one compound enabling the nitrogenous polysaccharide(s) to be dissolved in the solution.

3. The production method according to claim 1 or 2, wherein the mass proportions, relative to the mass of the protic polar solvent(s), are the following ones:

- from 1 % to 20 % of the gelling compound(s) and of the nitrogenous polysaccharide(s),
- from 5 % to 25 % of the surfactant(s), and
- from 0 % to 10 % of the compound(s) enabling the nitrogenous polysaccharide to be dissolved in the solution.

4. The production method according to any of claims 1 to 3, wherein the non-nitrogenous polysaccharide is chosen from agar-agar and carrageenan and is, preferentially, agar-agar.

5. The production method according to any of claims 1 to 4, wherein the nitrogenous polysaccharide is a chitosan.

6. The production method according to claim 5, wherein the chitosan has the following structural formula (I):

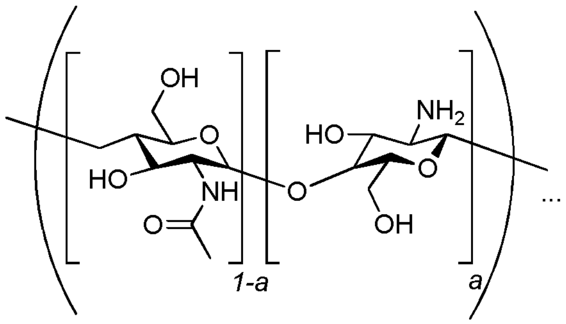

(I)

with $\alpha$ such that $0 \leq \alpha \leq 1$, advantageously $0{,}5 < \alpha \leq 1$ and, preferentially, $0{,}75 \leq \alpha \leq 1$.

**7.** The production method according to any of claims 2 to 6, wherein the compound enabling said nitrogenous polysaccharide(s) to be dissolved in the solution is chosen from an inorganic acid such as HCl, HBr, HF, $H_2SO_4$ and $H_3PO_4$ and an organic acid such as a carboxylic acid having the molecular formula $C_mH_{2m+1}COOH$ with $0 \leq m \leq 5$ and a dicarboxylic acid having the molecular formula $HOOC(CH_2)_mCOOH$ with $0 \leq m \leq 5$.

**8.** The production method according to any of claims 1 to 7, wherein water is chosen from demineralized water, distilled water and deionized water.

**9.** The production method according to any of claims 1 to 8, wherein the surfactant is chosen from an anionic surfactant such as sodium octylsulphate, sodium decylsulphate and sodium laurylethersulphate, a cationic surfactant such as a dodecyltrimethylammonium salt, and an non-ionic surfactant such as polyvinyl alcohol.

**10.** The production method according to any of claims 1 to 9, wherein the gas implemented in step (b) is chosen from Ar, He, $N_2$, $O_2$, $H_2$, $CO_2$, $N_2O$, $CH_4$ and the mixture of at least two of these gases, for example air.

**11.** The production method according to any of claims 1 to 10, wherein steps (b) and (c) are concomitant.

**12.** An aqueous foam obtained, or likely to be obtained, by the production method according to any of claims 1 to 11.

**13.** A use of the aqueous foam according to claim 12 to complex at least one metal in cationic form.

**14.** The use according to claim 13, wherein the metal is chosen from a transition metal such as Sc, Ti, V, Cr, Mn, Fe, Co, Ni, Cu, Zn, Zr, Nb, Ag, Hf, Ta, Au and Hg, and a lanthanide such as Nd, Eu, Gd and Yb.

**15.** A use of the aqueous foam according to claim 12 or the use according to claim 13 or 14 in the field of decontamination, in particular in the field of nuclear decontamination, in the field of purification of effluents, or in the field of containment or defusing of explosive devices or devices suspected of being explosive.

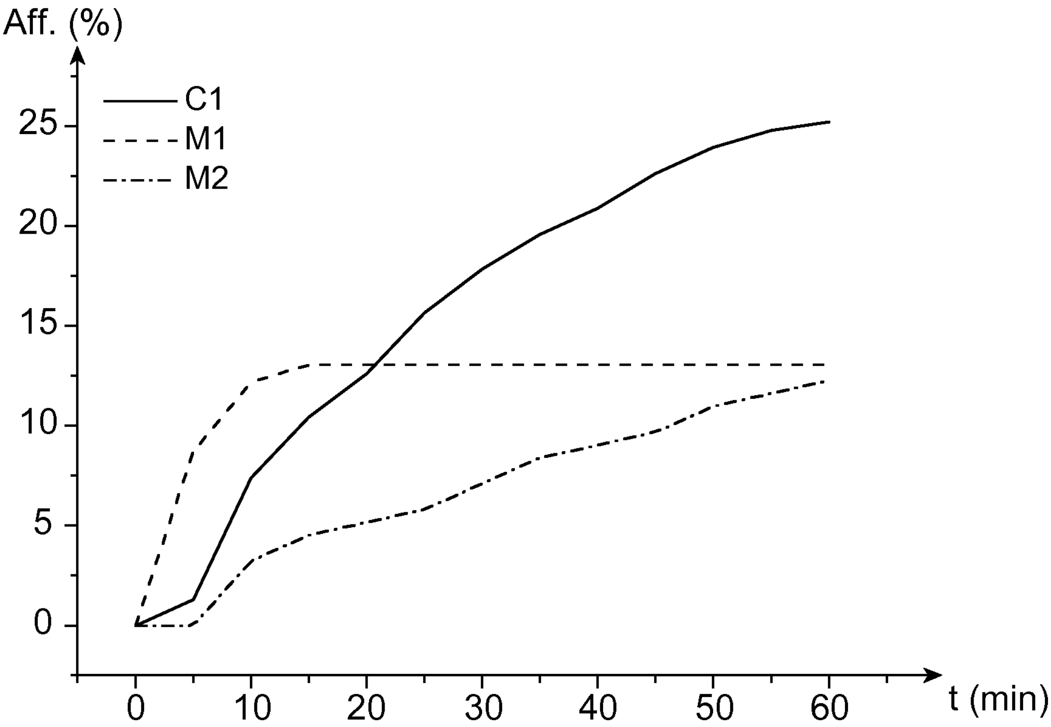
Aff. (%)
C1
M1
M2
25
20
15
10
5
0
0
10
20
30
40
50
60
t (min)

FIG. 1

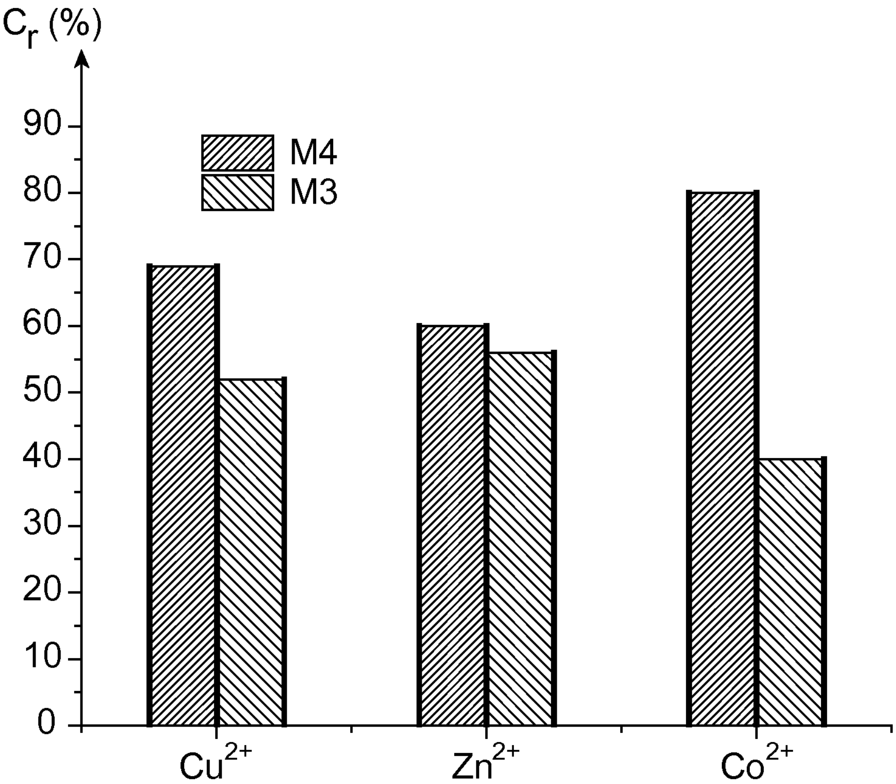
$C_r$ (%)
M4
M3
90
80
70
60
50
40
30
20
10
0
$Cu^{2+}$
$Zn^{2+}$
$Co^{2+}$

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5360828 A
- US 5382285 A